(19) Europäisches Patentamt
European Patent Office
Office européen des brevets

(11) **EP 4 258 454 A1**

(12) **EUROPEAN PATENT APPLICATION**

(43) Date of publication:
**11.10.2023 Bulletin 2023/41**

(21) Application number: **23166188.5**

(22) Date of filing: **31.03.2023**

(51) International Patent Classification (IPC):
*H01M 50/533* (2021.01)   *H01M 50/534* (2021.01)
*H01M 50/536* (2021.01)   *H01M 50/538* (2021.01)
*H01M 50/176* (2021.01)   *H01M 50/178* (2021.01)
*H01M 50/548* (2021.01)   *H01M 10/0587* (2010.01)
*H01M 4/64* (2006.01)

(52) Cooperative Patent Classification (CPC):
**H01M 10/0587; H01M 4/64; H01M 50/176;
H01M 50/178; H01M 50/533; H01M 50/534;
H01M 50/536; H01M 50/538; H01M 50/548;**
H01M 50/103; H01M 50/105; Y02P 70/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.04.2022 CN 202210367256**

(71) Applicant: **Ningde Amperex Technology Ltd.
Ningde City, Fujian 352100 (CN)**

(72) Inventors:
• **LI, Fangfang
  Ningde City, Fujian Province, People s Republic of
  China, 352100 (CN)**
• **DAI, Zhifang
  Ningde City, Fujian Province, People s Republic of
  China, 352100 (CN)**
• **HU, Xiaoming
  Ningde City, Fujian Province, People s Republic of
  China, 352100 (CN)**

(74) Representative: **Icosa
  83 avenue Denfert-Rochereau
  75014 Paris (FR)**

(54) **ELECTROCHEMICAL APPARATUS AND ELECTRONIC DEVICE**

(57) An electrochemical apparatus includes a housing (100) and an electrode assembly (200) accommodated in the housing (100). The electrode assembly (200) includes a first electrode plate (210), a second electrode plate (220), and a separator (230) wound together. The first electrode plate (210) includes a first current collector (211) having a first region (2111) and a second region (2112); and a first active material layer (212) disposed in the first region (2111). The second region (2112) is provided at an end of the first current collector (211) in a first direction X to form a first tab. The second electrode plate (220) includes a second current collector (221); at least two second tabs (222); and a second active material layer (223) disposed on the second current collector (221). The at least two second tabs (222) are connected to an end of the second current collector (221) facing away from the second region (2112) in a first direction X; The at least two second tabs (222) are spaced apart in a winding direction of the electrode assembly (200) and are integrally formed with the second current collector (221).

EP 4 258 454 A1

## Description

## TECHNICAL FIELD

This application relates to the field of battery technologies, and in particular, to an electrochemical apparatus and an electronic device.

## BACKGROUND

An electrochemical apparatus is an apparatus that converts external energy into electric energy and that stores the electric energy in the electrochemical apparatus, to supply power to an external device (for example, a portable electronic device) as needed. Generally, an electrochemical apparatus includes a housing, an electrode assembly accommodated in the housing, conductive members leading out polarities of the electrode assembly, and an electrolyte. The electrode assembly includes a first electrode plate, a second electrode plate, and a separator, where the first electrode plate, the second electrode plate, and the separator are stacked and wound, and the first electrode plate and the second electrode plate have opposite polarities, with the separator sandwiched therebetween for separation. One conductive member is connected to the first electrode plate and extends out of the housing, and another conductive member is connected to the second electrode plate and extends out of the housing. In this way, the electrochemical apparatus can be connected to an electrical load through the two conductive members.

To reduce internal resistance of the electrochemical apparatus, some electrochemical apparatuses on the market employ tabless scheme. Specifically, in an extension direction of a transverse side of the first electrode plate, there is a first blank region uncoated with an active material layer at an end of the first electrode plate, and layers of the first blank region converge and are stacked; and there is a second blank region uncoated with an active material layer at an end of the second electrode plate away from the first blank region, and layers of the second blank region converge and are stacked. In this way, the first electrode plate (or the second electrode plate) is split into multiple areas along a longitudinal side, the first blank regions (or second blank regions) stacked connect the areas in parallel, to reduce internal resistance of the first electrode plate (or the second electrode plate). That is, the electrochemical apparatus can improve a current situation that the electrochemical apparatus has relatively large internal resistance.

In implementation of this application, the inventors of this application found that during preparation of the electrochemical apparatus, an electrolyte infiltrates into the electrode assembly at a relatively low speed.

## SUMMARY

This application is to provide an electrochemical apparatus and an electronic device, to improve a current situation of slow infiltration into an electrode assembly.

According to a first aspect, an embodiment of this application provides an electrochemical apparatus.

The electrochemical apparatus includes a housing and an electrode assembly, the electrode assembly being accommodated in the housing. The electrode assembly includes a first electrode plate, a second electrode plate, and a separator that are wound, the separator being disposed between the first electrode plate and the second electrode plate. The first electrode plate includes a first current collector and a first active material layer, where the first current collector includes a first region and a second region, the second region is at an end of the first current collector in a first direction to form a first tab, and the first active material layer is disposed in the first region. The second electrode plate includes a second current collector, at least two second tabs, and a second active material layer, where the second tabs are connected to an end of the second current collector away from the second region in a first direction, the second tabs are spaced apart in a winding direction of the electrode assembly, the second tabs are integrally formed with the second current collector, and the second active material layer is disposed on the surface of the second current collector. The first region has a first side in a width direction of the first current collector, the first current collector is wound, and the first direction is an extension direction of the first side.

In the related art, a tabless disposing manner of an electrode assembly makes layers of a first electrode plate converge and be stacked at one end in a transverse side direction, and layers of a second electrode plate converge and be stacked at another end in the transverse side direction. This greatly reduces channels for an electrolyte to infiltrate into the electrode assembly, so that on one hand, infiltration into the electrode assembly takes a longer period, and on the other hand, an electrolyte retained in the electrode assembly decreases, and accordingly the electrochemical apparatus has a small amount of electrolyte.

Unlike this, in the electrochemical apparatus provided in embodiments of this application, the second tabs are spaced apart in the winding direction of the electrode assembly. In this way, the second electrode plate is equivalent to being split into multiple areas by the second tabs, and the second tabs connect the areas in parallel to reduce internal resistance of the second electrode plate. In addition, there is a gap between adjacent second tabs in the winding direction, and the gaps serve as channels for an electrolyte to infiltrate into the electrode assembly. That is, the electrochemical apparatus provided in embodiments of this application can improve a current situation of slow infiltration into the electrode assembly.

In some embodiments, the second region is wound continuously in the winding direction.

In some embodiments, the electrochemical apparatus further includes a first conductive member and a second conductive member. One end of the first conductive member is connected to the first tab, and another end of the first conductive member extends out of the housing. Ends of the second tabs away from the second current collector are stacked, one end of the second conductive member is connected to the second tabs, and another of the second conductive member extends out of the housing. In this way, the first conductive member and the second conductive member respectively constitute two conductive terminals of the electrochemical apparatus, which are used for electrical connection to an external electrical load.

In some embodiments, the first conductive member is welded to the first tab to form a first welding region, and the electrochemical apparatus satisfies at least one of the following conditions: (a) $0.3mm \leq L_{11} \leq H$, where a second direction is a direction perpendicular to both the first direction and a thickness direction of the electrochemical apparatus, a third direction is a direction parallel to a plane where the first welding region is located and perpendicular to the second direction, $L_{11}$ is width of the first welding region in the third direction, the second region has a second side adjacent to the first region in a width direction of the first electrode plate, and H is length of the second side; (b) $0.5 < H/T \leq 3.5$, where the second region has a second side adjacent to the first region in a width direction of the first electrode plate, H is length of the second side, and T is thickness of the electrochemical apparatus; (c) $0.5mm \leq L_{12} < W$, where $L_{12}$ is width of the first welding region in a second direction, and W is width of the electrochemical apparatus in the second direction, the second direction being a direction perpendicular to both the first direction and a thickness direction of the electrochemical apparatus; or (d) $5N \leq F \leq 900N$, where F is a welding tension between the first conductive member and the first tab.

Such design is to ensure a sufficient area of the first welding region, so as to ensure a good welding strength between the first conductive member and the first current collector.

In some embodiments, the electrochemical apparatus includes N first conductive members, and the electrochemical apparatus satisfies at least one of the following conditions: (e) N=1 and

$$\frac{L21}{2} - 2d \leqslant L_1 \leqslant \frac{L21}{2} + 2d$$

, where $L_1$ is a distance between the first conductive members and the first side in a winding direction of the first electrode plate, the first region further has a third side in the width direction of the first current collector, $L_{21}$ is a distance between the first side and the third side in the winding direction of the first electrode plate, and d is width of the first conductive member; (f) N≥2 and

$$\frac{n*L21}{(N+1)} - 2d \leqslant Ln \leqslant \frac{n*L21}{(N+1)} + 2d$$

, where the first region further has a third side in the width direction of the first current collector, $L_{21}$ is a distance between the first side and the third side in the winding direction of the first electrode plate, n is a natural number ranging from 1 to N, Ln is a distance in the winding direction of the first electrode plate between the first side and the n-th first conductive member as counted from the first side in the winding direction, and d is width of the first conductive member; or (g) N≥2, where the first conductive members are stacked in a thickness direction of the electrochemical apparatus.

Such design is to make the first conductive member be close to the middle of a longitudinal side of the first current collector, which helps to reduce internal resistance of the first electrode plate.

In some embodiments, layers of an end of the first tab away from the second tab converge and are stacked in a thickness direction of the electrochemical apparatus, to form a first converging portion; and the first conductive member is fixed to the first converging portion. Disposing the first converging portion is conducive to reducing internal resistance of the first electrode plate.

In some embodiments, the first converging portion is bent, an end of the first converging portion away from the second electrode plate is a first end portion, and the first end portion is opposite the second electrode plate. The first conductive member includes a first portion and a second portion that are mutually connected, the first portion is stacked on the first end portion, the second portion is bent relative to the first portion, one end of the second portion is connected to the first portion, and another end of the second portion extends away from the electrode assembly.

In some embodiments, the second current collector includes a third region and a fourth region. The third region is provided with a second active material layer on the surface. The fourth region is disposed at an end of the third region away from the second region, and the fourth region is provided with no such second active material layer on the surface. The second tabs include a fifth region and a sixth region, the fifth region being connected to an end of the fourth region away from the third region, and the sixth region being connected to an end of the fifth region away from the fourth region. The fourth region and the fifth region are provided with an insulation material layer on the surface.

The insulation material layer is disposed to reduce, during laser die-cutting of the second current collector and the second tabs, a risk of uncontrollable flowing of aluminum beads formed by aluminum foil melting to the surface of the second current collector, thereby reducing a risk of puncturing the separator and a risk of short-circuiting the electrode assembly. Optionally, a material of the insulation material layer includes a ceramic material.

In some embodiments, the first electrode plate is an anode plate, and a material of the first current collector includes at least one of copper, aluminum, nickel, or alloys thereof.

In some embodiments, the first current collector satisfies at least one of the following conditions: (h) the first current collector has a thickness of 3 μm to 6 μm; or

(i) the first current collector has a tensile strength of 150 MPa to 450 MPa.

In some embodiments, the first electrode plate is a cathode plate, and a material of the first current collector includes aluminum.

According to a second aspect, an embodiment of this application provides an electronic device, and the electronic device includes the foregoing electrochemical apparatus. Including the electrochemical apparatus, the electronic device can improve a current situation of slow infiltration into the electrode assembly of the electrochemical apparatus in the electronic device.

**BRIEF DESCRIPTION OF DRAWINGS**

To describe the technical solutions in the embodiments of this application more clearly, the following briefly describes the accompanying drawings required for describing the embodiments. Apparently, the accompanying drawings in the following description show only some embodiments of this application, and persons of ordinary skill in the art may still derive other drawings from structures shown in these accompanying drawings without creative efforts.

FIG. 1 is a schematic diagram of an electrochemical apparatus according to an embodiment of this application;
FIG. 2 is a schematic diagram of the electrochemical apparatus in FIG. 1 with a housing hidden;
FIG. 3 is a schematic cross-sectional diagram of the electrochemical apparatus in FIG. 1 along line A-A;
FIG. 4 is a schematic cross-sectional diagram of the electrochemical apparatus in FIG. 1 along line B-B;
FIG. 5 is a schematic diagram of a connection between the first electrode plate in a flattened state in FIG. 4 and a first conductive member;
FIG. 6 is a schematic diagram of the second electrode plate in a flattened state in FIG. 4;
FIG. 7 is a schematic diagram of an electrochemical apparatus with a housing hidden according to another embodiment of this application;
FIG. 8 is a schematic diagram of the first electrode plate in a flattened state of the electrochemical apparatus in FIG. 7; and
FIG. 9 is a schematic diagram of an electronic apparatus according to an embodiment of this application.

**DETAILED DESCRIPTION**

For ease of understanding this application, the following further describes this application in detail with reference to the accompanying drawings and specific embodiments. It should be noted that when an element is expressed as being "fastened/fixed" to another element, it may be directly fastened/fixed to the another element or one or more intermediate elements may be present. When an element is "connected to" another element, the element may be directly connected to the another element, or there may be one or more elements between the elements. The terms "vertical", "horizontal", "left", "right", "inside", "outside", and similar expressions used in this specification are merely for description purposes.

Unless otherwise defined, all technical and scientific terms used herein shall have the same meanings as commonly understood by those skilled in the art to which this application belongs. The terms used in the specification of this application are merely intended to describe specific embodiments but not to constitute any limitations on this application. The term "and/or" used in this specification includes any and all combinations of one or more relevant listed items.

In addition, technical features involved in different embodiments of this application that are described below may be combined as long as they do not conflict with each other.

In this specification, "installing" includes fixing or limiting an element or apparatus to a specific location or place by means of welding, screwing, clamping, bonding, or the like. The element or apparatus may stay still at the specific position or place, or may move within a limited range. After being fixed or limited to the specific position or place, the element or apparatus can be disassembled or cannot be disassembled. This is not limited in the embodiments of this application.

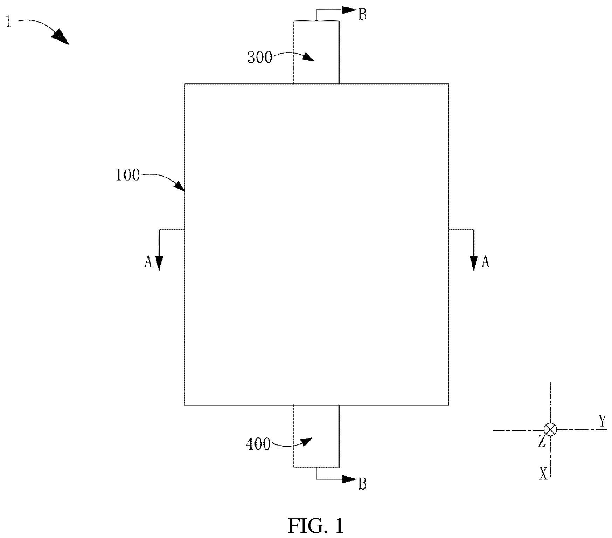

Refer to FIG. 1 to FIG. 3, which respectively show a schematic diagram of an electrochemical apparatus 1 according to an embodiment of this application, a schematic diagram of the electrochemical apparatus 1 with a housing 100 hidden, and a schematic cross-sectional diagram along line A-A in FIG. 1. The electrochemical apparatus 1 includes the housing 100 and an electrode assembly 200. The housing 100 is a base body for mounting other parts of the electrochemical apparatus 1. The electrode assembly 200 is accommodated in the housing 100, and includes a first electrode plate 210, a second electrode plate 220, and a separator 230 that are wound. The separator 230 is disposed between the first electrode plate 210 and the second electrode plate 220.

In this embodiment, the electrochemical apparatus 1 further includes a first conductive member 300 and a second conductive member 400, where the first conductive member 300 is connected to the first electrode plate 210 and one end of the first conductive member 300 extends out of the housing 100 to form a conductive terminal of the electrochemical apparatus 1; and one end of the second conductive member 400 is connected to the second electrode plate 220, and another end of the second conductive member 400 extends out of the housing 100 to form another conductive terminal of the electrochemical apparatus 1. This facilitates connecting the electrochemical apparatus 1 to an external electrical load. The electrochemical apparatus 1 being a lithium battery is used as an example in the following to describe the housing 100, the electrode assembly 200, the first conductive member 300, and the second conductive member 400 in turn. However, it should be understood that in another embodiment of this application, the electrochemical apparatus 1 may further be a sodium-ion battery or another electrochemical apparatus.

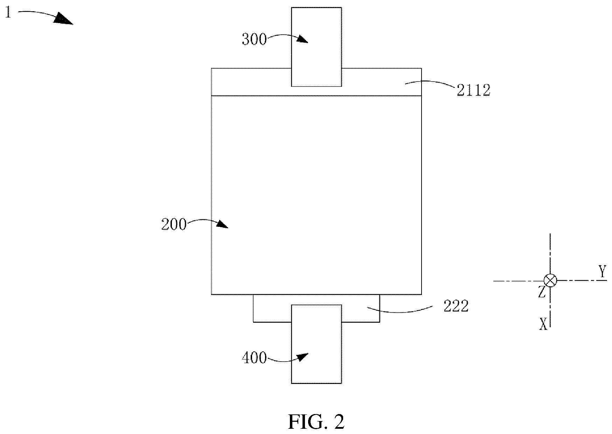

For details about the housing 100, refer to FIG. 1 and FIG. 2. The housing 100 is of a relatively flat box-like structure as a whole and is provided with an accommodating chamber (not shown) for accommodating the electrode assembly 200, a part of the first conductive member 300, a part of the second conductive member 400, and an electrolyte not shown. In this embodiment, the electrochemical apparatus 1 is a pouch battery; and correspondingly the housing 100 is made of a flexible sheet material, for example, aluminum-plastic film. It should be noted that, in another embodiment of this application, the electrochemical apparatus 1 may alternatively be a hard-shell battery. Correspondingly, the housing 100 may be made of a hard material, for example, a polymer material or a metal material.

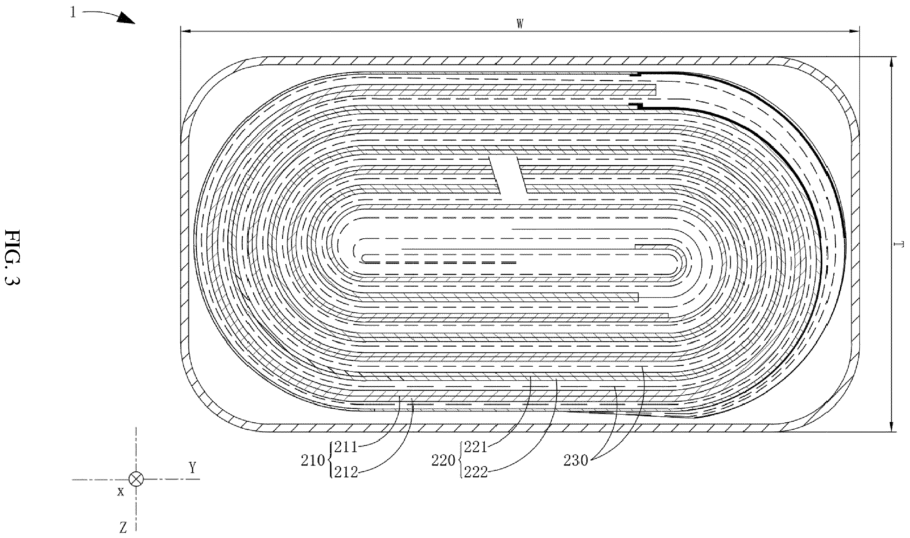

For the electrode assembly 200, refer to FIG. 2 and FIG. 3. As a core element for charging and discharging the electrochemical apparatus 1, the electrode assembly 200 includes the first electrode plate 210, the second electrode plate 220, and the separator 230. The first electrode plate 210, the second electrode plate 220, and the separator 230 are stacked and wound. The first electrode plate 210 and the second electrode plate 220 have opposite polarities, and the separator 230 is disposed therebetween for separation. In this embodiment, the first electrode plate 210 is an anode plate and the second electrode plate 220 is a cathode plate. It can be understood that in another embodiment of this application, the first electrode plate 210 may alternatively be a cathode plate, and correspondingly the second electrode plate 220 is an anode plate.

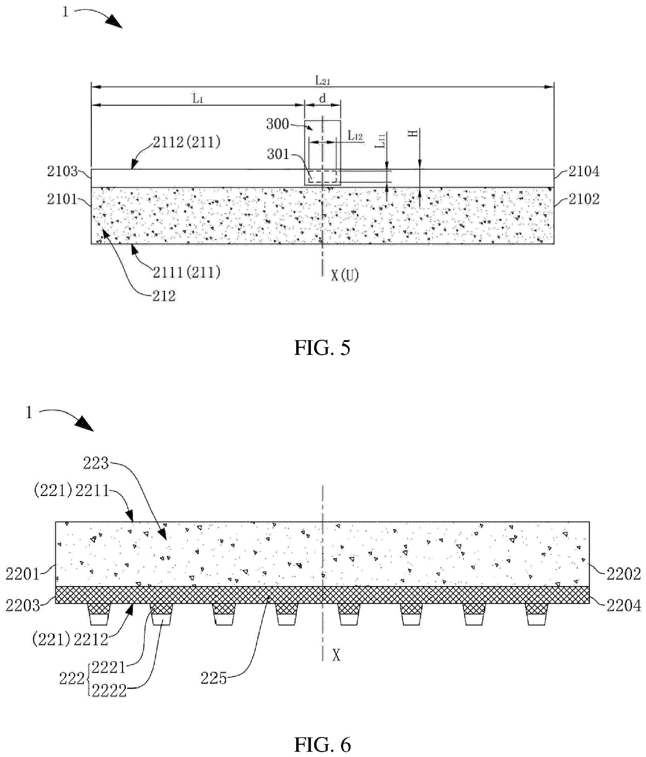

First, the first electrode plate 210 is described in detail. Refer to FIG. 5, which shows a schematic diagram of a connection between the first electrode plate 210 in a flattened state and the first conductive member 300. In addition, with reference to other accompanying drawings, the first electrode plate 210 includes the first current collector 211 and a first active material layer 212. As a base material layer coated with the first active material layer 212, the first current collector 211 is made of a conductive material. In this embodiment, a material of the first current collector 211 includes copper. For example, the first current collector 211 is copper foil. Optionally, the first current collector 211 has a thickness of 3 $\mu$m to 6 $\mu$m. The first current collector 211 having a thickness not greater than 6 $\mu$m is to ensure that the first current collector 211 is sufficiently thin; and the first current collector 211 having a thickness not less than 3 $\mu$m is to ensure that the first current collector 211 has sufficient thickness to provide support for the first active material layer 212, and also to avoid that the first current collector 211 is too thin to be processed. Further optionally, the first current collector 211 has a tensile strength of 150 MPa to 450 MPa. The first current collector 211 having a tensile strength not less than 150 Mpa is to ensure that the first current collector 211 has sufficient strength to provide support for the first active material layer 212, and the first current collector 211 having a tensile strength not greater than 450 MPa is to avoid excessive cost of the first current collector 211. It should be noted that tensile strength can be measured by using a tensile machine. For example, a rectangular sample of 10mm$\times$200mm can be separated from the first current collector 211, then the tensile machine controls the sample by clamping the two ends of the sample in a length direction, where a distance between two collets of the tensile machine is 100 mm, then the tensile machine is controlled to stretch the sample until the sample breaks, then tension data of the tensile machine is recorded, and the tensile strength of the first current collector 211 is calculated based on the data and size information of the first current collector 211.

It can be understood that in another embodiment of this application, a material of the first current collector 211 may alternatively be adaptively adjusted on the foregoing basis. For example, in another embodiment of this application, the material of the first current collector 211 may alternatively include at least one of copper alloys, nickel, nickel alloys, aluminum, or aluminum alloys.

Continuing to refer to FIG. 5 in combination with other accompanying drawings, the first current collector 211 includes a first region 2111, where the first region 2111 is a region coated with the first active material layer 212. The first region 2111 has a first side 2101 and a third side 2102 in a width direction of the first current collector 211. The first side 2101 is opposite the third side 2102. The first side 2101 is located in a central area of the electrode assembly 200. The first region 2111 is wound around the first side 2101, that is, the first electrode plate 210 is wound around the first side 2101. Thus, the first side 2101 is at a winding beginning end of the first region 2111, and the third side 2102 is at a winding terminating end of the first region 2111. In addition, the first current collector 211 further includes a second region 2112 connected to an end of the first region 2111 in a first direction X, that is, the second region 2112 is located at an end of the first current collector 211 in the first direction X; and the second region 2112 is a region uncoated with the first active material layer 212. The second region 2112 has a second side 2103 and a fourth side 2104 in a width direction of the first current collector 211 that are adjacent to the first region 2111. The second side 2103 is opposite the fourth side 2104, and length of the second side 2103 is H. The second side 2103 is located in a central area of the electrode assembly 200. The second region 2112 is wound around the second side 2103, that is, the second side 2103 is at a winding beginning end of the second region 2112, and the fourth side 2104 is at a winding terminating end of the second region 2112. It should be noted that the "first direction" mentioned in this application document is an extension direction of the first side 2101, which is perpendicular to a thickness direction Z of the electrochemical apparatus 1. In addition, for the convenience of explanation, this application document defines a direction perpendicular to both the above thickness direction Z and the first direction X as a second direction Y.

The first electrode plate 210 is wound so that the first region 2111 is continuously wound in the winding direction of the electrode assembly 200, where the first region 2111 and the first active material layer 212 applied onto the first region 2111 constitute a part for lithium-ion intercalation and deintercalation; and the second region 2112 is also continuously wound in the foregoing winding direction to form the first tab of the first electrode plate 210, where the first tab is connected to the first conductive member 300. In this embodiment, length of the second side 2103 is H, that is, when the first electrode plate 210 is in a flattened state, width of the second region 2112 is H.

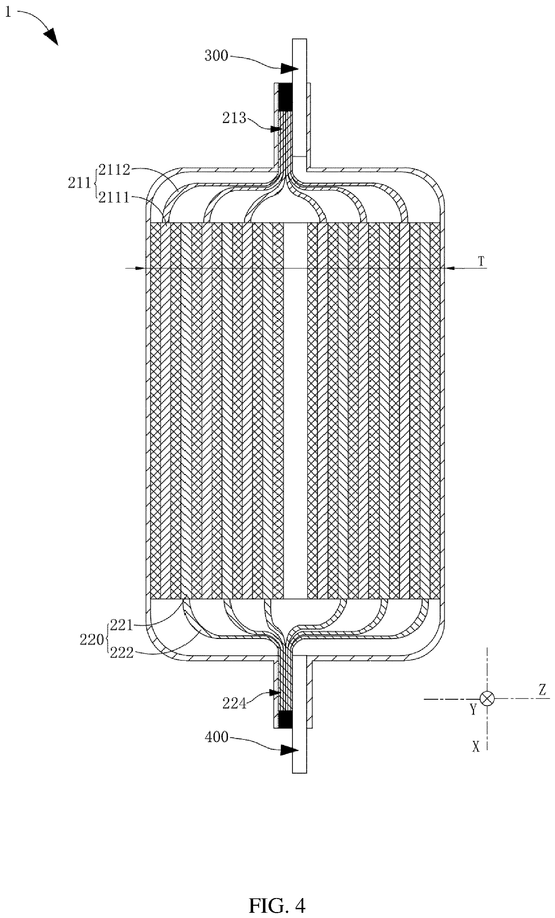

Referring to FIG. 4, in this embodiment, layers of an end of the first tab away from the first region 2111 in the first direction X converge in the thickness direction Z of electrochemical apparatus 1 and are stacked, and stacked portions of the second region 2112 constitute a first converging portion 213. In this embodiment, in the thickness direction Z, the first converging portion 213 is close to the middle of the electrode assembly 200 and extends as a whole in the first direction X.

In this embodiment, the electrochemical apparatus 1 satisfies: $0.5 < H/T \leq 3.5$, where H is the length of the second side 2103, and T is thickness of the electrochemical apparatus 1. $H/T > 0.5$ is designed to make each wound turn of the second region 2112 be stacked on a previous turn smoothly. In addition, because the second region 2112 is a region uncoated with the first active material layer 212, if the second region 2112 in the first direction X is excessively large, some materials of the first current collector 211 are wasted, and the second region 2112 occupies a larger space in the housing 100, thereby resulting in a lower energy density of the electrochemical apparatus 1. $H/T \leq 3.5$ is designed to avoid the foregoing shortcoming. It should be noted that there are actually various ways to measure the thickness T of the electrochemical apparatus 1. For example, the thickness can be obtained by using a caliper to clamp central areas of the two surfaces of the housing 100 that are opposite in the thickness direction Z. Certainly, to ensure the reliability of the measurement results, 5 to 10 measurements may be performed, and then an average value of the multiple measurement results is calculated as the thickness T of the electrochemical apparatus 1.

The following describes the second electrode plate 220 in detail. Refer to FIG. 6, which shows a schematic diagram of the second electrode plate 220 in a flattened state, and with reference to other accompanying drawings, the second electrode plate 220 includes a second current collector 221, at least two second tabs 222, and a second active material layer 223. As a base material layer coated with the second active material layer 223, the second current collector 221 is made of a conductive material. In this embodiment, a material of the second current collector 221 includes aluminum. For example, the second current collector 221 is aluminum foil with a thickness of 8 μm. Certainly, in another embodiment of this application, a material of the second current collector 221 may alternatively be adaptively adjusted on the foregoing basis. For example, in another embodiment of this application, the material of the second current collector 211 may alternatively include at least one of aluminum alloys, nickel, or nickel alloys.

Continuing to refer to FIG. 6 in combination with other accompanying drawings, the second current collector 221 includes a third region 2211, where the third region 2211 is a region coated with the second active material layer 223. The third region 2211 has a fifth side 2201 and a seventh side 2202 in a width direction of the second current collector 221. Both the fifth side 2201 and the seventh side 2202 extend in the first direction X and are opposite each other. In other words, the first direction X is a direction extending parallel to the fifth side 2201. The fifth side 2201 is located in a central area of the electrode assembly 200. The third region 2211 is wound around the fifth side 2201, that is, the fifth side 2201 is at a winding beginning end of the third region 2211, and the seventh side 2202 is at a winding terminating end of the third region 2211. The second electrode plate 220 is wound so that the third region 2211 is continuously wound in the winding direction of the electrode assembly 200, where the third region 2211 and the second active material layer 223 applied onto the third region 2211 constitute a part for lithium-ion intercalation and deintercalation.

In the first direction X, all second tabs 222 are connected to an end of the second current collector 221 away from the second region 2112; all the second tabs 222 are spaced apart in the winding direction of the electrode assembly 200. Refer to FIG. 4. In the thickness direction Z, the second tabs 222 are connected to an end of the second current collector 221 and sequentially spaced apart, ends of the second tabs 222 away from the second current collector 221 are stacked, and stacked portions of the second tabs 222 constitute a second converging portion 224. In this embodiment, the second converging portion 224 extends as a whole in the first direction X away from the first converging portion 213.

In this embodiment, the second tabs 222 are integrally formed with the second current collector 221. Optionally, the second tabs 222 are integrally formed with the second current collector 221 through laser die-cutting of a foil material. It should be noted that because aluminum has a low melting point, edges of the second current collector 221 and the second tabs 222 are easy to be melted in the process of laser die-cutting, and large-size aluminum beads are formed, and therefore large-size burrs are formed after cooling. This increases a risk of puncturing the separator 230, thus increasing a risk of short-circuiting the electrode assembly 200. To overcome this shortcoming, the second current collector 221 and the second tabs 222 are provided with an insulation material layer 225 on the surface.

Specifically referring to FIG. 6 in combination with other accompanying drawings, the second current collector 221 further includes a fourth region 2212. As a region uncoated with the second active material layer 223, the fourth region 2212 is disposed at an end of the third region 2211 away from the second region 2112 in the first direction X. The fourth region 2212 has a sixth side 2203 and an eighth side 2204 in a width direction of the second current collector 221 that are adjacent to the third region 2211. The sixth side 2203 is opposite the eighth side 2204. The sixth side 2203 is located in a central area of the electrode assembly 200. The fourth region 2212 is wound around the sixth side 2203, that is, the sixth side 2203 is at a winding beginning end of the fourth region 2212, and the eighth side 2204 is at a winding terminating end of the fourth region 2212. The second electrode plate 220 is wound so that the fourth region 2212 is continuously wound in the winding direction.

The second tabs 222 are connected to an end of the fourth region 2212 away from the third region 2211 and include a fifth region 2221 and a sixth region 2222 that are sequentially arranged in the first direction X. The fifth region 2221 is connected to an end of the fourth region 2212 away from the third region 2211 and the sixth region 2222 is connected to an end of the fifth region 2221 away from the fourth region 2212. The fourth region 2212 and the fifth region 2221 are provided with an insulation material layer 225 on the surface. The insulation material layer is disposed to reduce, during laser die-cutting of the second current collector 221 and the second tabs 222, a risk of uncontrollable flowing of aluminum beads formed by aluminum foil melting to the surface of the second current collector 221, thereby reducing a risk of puncturing the separator 230 and a risk of short-circuiting the electrode assembly 200. Optionally, a material of the insulation material layer includes a ceramic material.

For the first conductive member 300, refer to FIG. 4 in combination with FIG. 1 and FIG. 2. The first conductive member 300 is a conductor, one end of which is connected to the first converging portion 213 and another end extends out of the housing 100. Specifically, the first conductive member 300 is of a flat sheet-like structure, with a thickness ranging from 0.1 mm to 1 mm. In this embodiment, the first conductive member 300 is fixed to the first converging portion 213 through welding so that the first conductive member 300 is electrically connected to the first current collector 211. It can be understood that in another embodiment of this application, the first conductive member 300 may alternatively be fixed to the first converging portion 213 through another means such as bonding, provided that the two are electrically connected with each other. Optionally, a length L3 of the first conductive member 300 satisfies: H<L3<6H. H is a length of the second side 2103. When the first electrode plate 210 is unfolded to be flat, the second side 2103 extends along a straight line, and H is a length of the second side 2103 extended along a straight line. When the first electrode plate 210 is wound, the second side 2103 extends along a curve (or straight line), and H is correspondingly a length of the second side 2103 extended along the curve (or straight line).

Further referring to FIG. 5, the first conductive member 300 is welded to the first tab to form a first welding region 301. In this embodiment, the electrochemical apparatus 1 satisfies: $0.3mm \leq L_{11} \leq H$ and $0.5mm \leq L_{12} < W$. $L_{11}$ is width of the first welding region 301 in a third direction U, where the third direction U is parallel to the first welding region 301 (that is, parallel to the first conductive member 300) and perpendicular to the second direction Y. For example, in this embodiment, the first conductive member 300 and the first welding region 301 are arranged perpendicular to the thickness direction Z, and the third direction U is parallel to the first direction X. H is a length of the second side 2103. $L_{12}$ is width of the first welding region 301 in the second direction Y, where W is width of the electrochemical apparatus in the second direction Y. Such design is to ensure a sufficient area of the first welding region 301, so as to ensure a good welding strength between the first conductive member 300 and the first current collector 211.

It should be noted that there are actually various ways to obtain the dimensions $L_{11}$ and $L_{12}$. For example, first, the first conductive member 300 is separated from the first current collector 211, where the first welding region 301 protrudes relative to surface of the first current collector 211. Then, the first welding region is measured with a caliper in the third direction U and the second direction Y separately to obtain the dimensions $L_{11}$ and $L_{12}$. The dimension H can be obtained as follows: The first electrode plate 210 is unfolded and directly measured by a measuring tool; or after the first electrode plate 210 is unfolded, width of the first current collector 211 in the first direction X as a whole and width of the first active material layer 212 in the first direction X are measured sequentially, and a difference between the former and the latter is calculated, which is the measured value of the dimension H. The dimension W can be obtained by using a caliper to clamp two ends of the housing 100 that are opposite in the second direction Y. Certainly, to ensure reliability of the measurement results, 5 to 10 measurements may be performed, and then an average value of the multiple measurement results is calculated as the dimension W.

Further, the electrochemical apparatus 1 satisfies 5N≤F≤900N, where F is a welding tension between the first conductive member 300 and the first tab. Such design is also to ensure that the first welding region 301 can provide a high welding strength, so that the first conductive member 300 has good anti-drop performance.

Regarding the number of first conductive members 300, the electrochemical apparatus 1 in this embodiment includes one first conductive member 300. Optionally, the electrochemical apparatus 1 satisfies:

$$\frac{L21}{2} - 2d \leqslant L_1 \leqslant \frac{L21}{2} + 2d$$

. In a view from the first direction X, $L_1$ is a distance between the first conductive member 300 and the first side 2101 in the winding direction; in a view from the first direction X, $L_{21}$ is a distance between the first side 2101 and the third side 2102 in the winding direction; and d is width of the first conductive member 300, specifically width of the first conductive member 300 in the winding direction. Since the winding direction is an extension direction of a longitudinal side of the first current collector 211, when the first electrode plate 210 is in a flattened state, $L_1$ is a distance between the first conductive member 300 and the first side 2101 in the extension direction of the longitudinal side, and $L_{21}$ is a distance between the first side 2101 and the third side 2102 in the extension direction of the longitudinal side and is also a length of the first current collector 211. Such design is to make the first conductive member 300 be close to the middle of a longitudinal side of the first current collector 211, which helps to reduce internal resistance of the first electrode plate 210.

It should be understood that the electrochemical apparatus 1 including the first conductive member 300 is used as an example for description in this embodiment, but this application is not limited thereto. In another embodiment of this application, the electrochemical apparatus 1 may alternatively include N first conductive members 300, where N≥2. In this case, the electrochemical apparatus 1 satisfies

$$\frac{n*L21}{(N+1)} - 2d \leqslant Ln \leqslant \frac{n*L21}{(N+1)} + 2d$$

and the first conductive members 300 are stacked.

Here, n is a natural number from 1 to N, Ln is a distance in the winding direction of the first electrode plate 210 between the first side 2101 and the n-th first conductive member 300 as counted from the first side 2101 in the winding direction, and d is still width of the first conductive member 300. Such design is to make all first conductive members 300 be respectively close to corresponding points that divide the longitudinal side of the first current collector 211 into (N+1) equal parts, so that the first conductive members 300 divide the first current collector 211 into relatively uniform (N+1) regions and connect these regions in parallel, thereby effectively reducing internal resistance of the first electrode plate 210.

It should also be noted that even though the first conductive members 300 extend out of the housing 100 in a straight line in this embodiment, this application is not limited thereto and the inventors of this application can further make adaptive deformations on the foregoing basis. For example, in some other embodiments of this application, the first converging portion 213 is bent, and an end of the first converging portion 213 away from the second electrode plate 220 is a first end portion, where the first end portion is opposite the second electrode plate 220. Correspondingly, the first conductive member 300 includes a first portion and a second portion that are mutually connected. The first portion is stacked on the first end portion, and the second portion is bent relative to the first portion, where one end of the second portion is connected to the first portion, and another end extends away from the electrode assembly 200 to extend out of the housing 100.

For the second conductive member 400, continue to refer to FIG. 4 in combination with FIG. 1 and FIG. 2. One end of the second conductive member 400 is connected to the second converging portion 224 and another end extends away from the first conductive member 300 to extend out of the housing 100. Specifically, the second conductive member 400 is of a sheet-like structure, and one end thereof is stacked on the second converging portion 224 to be electrically connected to the second current collector 221. Optionally, the second conductive member 400 is fixed to the second converging portion 224 through welding. It can be understood that in another embodiment of this application, the second conductive member 400 may alternatively be fixed to the second converging portion 224 through another means such as bonding, provided that the two are electrically connected with each other.

Similarly, even though the second conductive members 224 extend out of the housing 100 in a straight line in this embodiment, this application is not limited thereto. The inventors of this application can further make adaptive deformations on the foregoing basis. For example, in some other embodiments of this application, the second converging portion 224 is bent, and an end of the second converging portion 224 away from the first electrode plate 210 is opposite the first electrode plate 210 wound. Correspondingly, the second conductive member 400 includes a third portion and a fourth portion that are mutually connected. The third portion is stacked on an end of the second converging portion 224 away from the first electrode plate 210, and the fourth portion is bent relative to the third portion, where one end of the fourth portion is connected to the third portion, and another end extends away from the electrode assembly 200 to extend out of the housing 100.

In the related art, a tabless disposing manner of an electrode assembly makes layers of a first current collector of a first electrode plate converge and be stacked at an end of the first direction to form a first tab, and layers of a second current collector of a second electrode plate converge and be stacked at the opposite end of the first direction to form second tabs. This disposing manner greatly reduces channels for an electrolyte to infiltrate into the electrode assembly, so that on one hand, infiltration into the electrode assembly takes a longer period, and on the other hand, an electrolyte retained in the electrode assembly decreases, and accordingly the electrochemical apparatus has a small amount of electrolyte when finally leaving the factory.

Unlike this, the electrochemical apparatus 1 according to the embodiments of this application includes the housing 100 and the electrode assembly 200. The electrode assembly 200 includes the first electrode plate 210, the second electrode plate 220, and the separator 230 that are wound. The separator 230 is disposed between the first electrode plate 210 and the second electrode plate 220. The first electrode plate 210 includes the first current collector 211 and the first active material layer 212. The first current collector 211 includes the first region 2111 and the second region 2112, the first active material layer 212 is disposed in the first region 2111, and the second region 2112 is located at an end of the first current collector 211 in the first direction X and forms the first tab of the first electrode plate 210. The second electrode plate includes the second current collector 221, the at least two second tabs 222, and the second active material layer 223. The second tabs 222 are integrally formed with the second current collector 221. The second tabs 222 are connected to an end of the second current collector 221 away from the second region 2112 in the first direction X, and all the second tabs 222 are spaced apart in the winding direction of the electrode assembly 200. In this way, there is a gap between adjacent second tabs 222 in the winding direction, and the gaps serve as channels for an electrolyte to infiltrate into the electrode assembly 200. That is, the electrochemical apparatus 1 provided in the embodiments of this application can improve a current situation of slow infiltration into the electrode assembly 200.

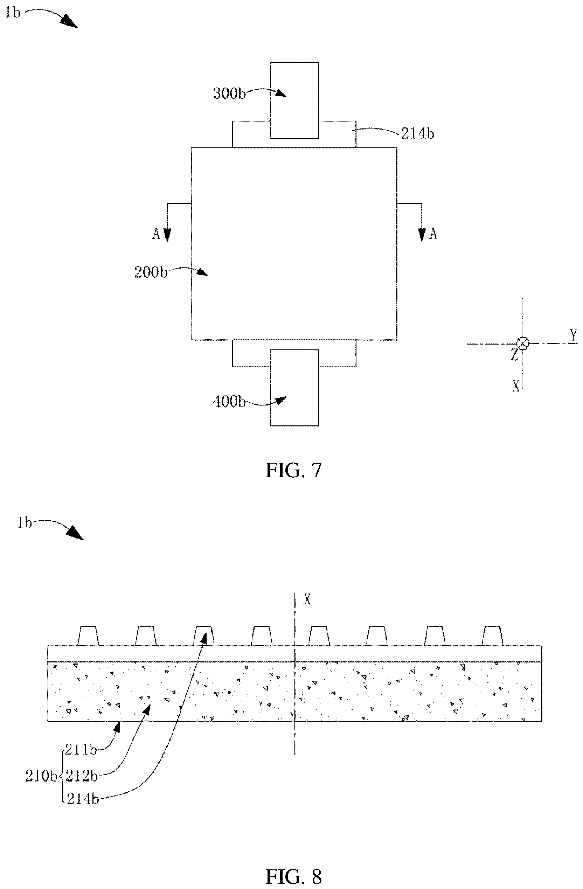

It should be understood that even though the electrode assembly 200 is configured as above in this embodiment, this application is not limited thereto and the inventors can further make adaptive deformations on the basis of the foregoing embodiments. For example, FIG. 7 shows a schematic diagram of an electrochemical apparatus 1b with a housing hidden according to another embodiment of this application, and FIG. 8 shows a schematic diagram of a first electrode plate 210b in a flattened state in the electrochemical apparatus 1b. The electrochemical apparatus 1b includes a housing, an electrode assembly 200b, a first conductive member 300b, and a second conductive member 400b. A main difference between the electrochemical apparatus 1b and the electrochemical apparatus 1 is as follows.

In the electrochemical apparatus 1, the first electrode plate 210 includes the first current collector 211, and the first current collector 211 includes the first region 2111 and the second region 2112 that are disposed sequentially in the first direction X. The first region 2111 is coated with the first active material layer 212 on the surface, and is continuously wound in the winding direction of the electrode assembly 200. The second region 2112 is uncoated with the first active material layer 212 on the surface and is continuously wound in the winding direction of the electrode assembly 200. Layers of the second region 2112 converge and are stacked to form the first tab of the first electrode plate 210.

In the electrochemical apparatus 1b, the first electrode plate 210 includes a first current collector 211b, a first active material layer 212b, and at least two first tabs 214b. The first current collector 211b is continuously wound in a winding direction of the electrode assembly, and the first active material layer 212b is applied on the surface of the first current collector 211b. The first tabs 214b are integrally formed with the first current collector 211b, and the first tabs 214b are connected to an end of the first current collector 211b away from the second tab and spaced apart in the winding direction. In the thickness direction Z, ends of the first tabs 214b connected to the first current collector 211 are sequentially arranged, and ends of the first tabs 214b away from the first current collector 211 are stacked to form the first converging portion.

The electrochemical apparatus 1b provided in this embodiment can also improve a current situation of slow infiltration into the electrode assembly. But in contrast, the electrochemical apparatus 1 requires no diecutting of the first electrode plate 210, thereby reducing the use of laser die-cutting equipment, reducing monitoring for a die-cutting process, shortening a manufacturing period of the first electrode plate 210, and thereby improving overall manufacturing efficiency of the electrochemical apparatus 1.

The following further describes differences between the electrochemical apparatus 1 and the electrochemical apparatus 1b in view of the situation that the first electrode plate is an anode plate, the first current collector includes copper foil, the second electrode plate is a cathode plate, and the second current collector includes aluminum foil.

Based on the above conditions, there is a gap between first tabs 214b in the electrochemical apparatus 1b in the winding direction of the electrode assembly 200b (that is, the longitudinal direction of the first current collector). Therefore, when the first electrode plate 210b is wound, the first tabs 214b are prone to warping and even ends of the first tabs 214b away from the first current collector 211b are folded in a direction approaching the first current collector 211b. The first tabs 214b folded in half may not be stacked with other first tabs 214b smoothly, and thus there is a risk of inverse contact with the edge of the second electrode plate 220. For example, the first current collector 211b has a thickness of 8 $\mu$m. In this case, a probability of the first tabs 214b being folded over in the process of winding the first electrode plate 210b is 2.0% to 5.0%, which means that the manufacturing cost of the electrochemical apparatus 1b is increased by 2.0% to 5.0%. In addition, to reduce the probability of the first tabs 214b being folded over, it is necessary to control the thickness of the first current collector 211b to be relatively large. For example, in some embodiments, the thickness of the first current collector 211b is 8 μm to 12 μm. Thus, the first current collector 211b needs to occupy a larger space, which may result in a lower energy density of the electrochemical apparatus 1b.

In contrast, the second region 2112 in the electrochemical apparatus 1 is continuously wound in the winding direction with no gaps; and during the winding process of the first electrode plate 210, there is a low probability that the second region 2112 is folded over as a whole. Therefore, compared with the electrochemical apparatus 1b having a high risk of the first tabs 214b being folded over, the electrochemical apparatus 1 has a low risk of the second region being folded over, thereby reducing the manufacturing cost.

In addition, since there is a low risk of the second region 2112 of the electrochemical apparatus 1 being folded over, the first current collector 211 can be controlled to be thinner. For example, in some embodiments, the first current collector 211 has a thickness of 3 μm to 6 μm, that is, the first current collector 211 needs to occupy a smaller space. The first current collector 211 having a thickness not greater than 6 μm is to ensure that the first current collector 211 is sufficiently thin; and the first current collector 211 having a thickness not less than 3 μm is to ensure that the first current collector 211 has sufficient thickness to provide support for the first active material layer 212, and also to avoid that the first current collector 211 is too thin to be processed. In the case that a volume of the electrochemical apparatus remains unchanged, a space saved by the first current collector 211 can be used to arrange the first active material layer 212, or extend the length of the first electrode plate 210 and the second electrode plate 220, thereby improving the overall energy density of the electrochemical apparatus 1.

The following further describes differences between electrochemical apparatus 1 and the electrochemical apparatus 1b in view of the situation that the first electrode plate 210 is a cathode plate, the first current collector 211 includes aluminum foil, the second electrode plate 220 is an anode plate, and the second current collector 221 includes copper foil.

Based on the above conditions, the first current collector 211b and all first tabs 214b in the electrochemical apparatus 1b are formed by laser die-cutting. To reduce the risk of uncontrollable aluminum beads produced during the laser die-cutting process, it is necessary to provide a region uncoated with the first active material layer at an end of the first current collector 211b close to the first tab 214b in the first direction X and dispose the insulation material layer, for example, a ceramic material layer, in this region and on the surfaces of ends of the first tabs 214b close to the first current collector 211b.

However, in an actual manufacturing process, interdiffusion may occur between the first active material layer and the insulation material layer in a junction region. Specifically, components of the first active material layer diffuse towards a side close to the first tabs 214b into the insulation material layer, and components of the insulation material layer diffuse towards a side away from the first tabs 214b into the first active material layer. The diffusion phenomenon has the following effects on the electrochemical apparatus 1b: (1) Diffusion of components of the insulation material layer into the first active material layer affects lithium-ion intercalation into and deintercalation out of the first electrode plate 210b, thus affecting the capacity of the electrochemical apparatus 1b. (2) Boundaries between the first active material layer and the insulation material layer being not clear affects positioning the first electrode plate 210b, the second electrode plate and the separator during stacking, and accordingly affects movement of lithium ions between the first electrode plate 210b and the second electrode plate. (3) When the components of the first active material layer diffuse to somewhere in the second active material layer exceeding the insulation material layer, lithium ions may precipitate in a form of simple substances on the surface of the second electrode plate, that is, lithium precipitation occurs.

In contrast, the second region 2112 in the electrochemical apparatus 1 is continuously wound in the winding direction. Thus, the die-cutting process is not required in the manufacturing process of the electrochemical apparatus 1, and further the process of applying the insulation material layer is not required either, thereby avoiding the shortcomings.

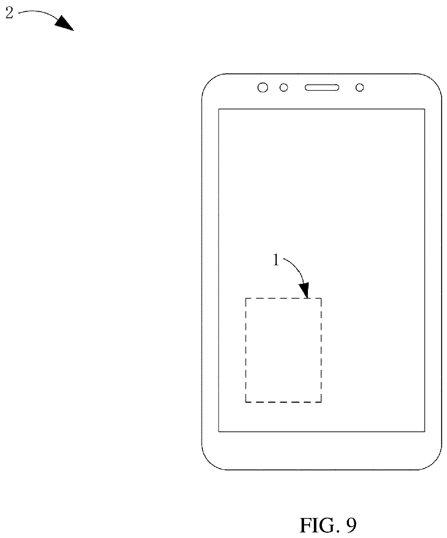

Based on the same inventive concept, this application further provides an electric device. Refer to FIG. 9, which shows a schematic diagram of an electronic device 2 according to an embodiment of this application. The electronic device includes the electrochemical apparatus 1 according to the foregoing embodiments and a load structure powered by the electrochemical apparatus 1. In this embodiment, the electronic device 2 includes a mobile phone. It can be understood that, in other embodiments of this application, the electronic device may alternatively be a tablet computer, a computer, a drone, and another apparatus driven by electricity.

Including the electrochemical apparatus 1, the electronic device 2 can improve a current situation of slow infiltration into the electrode assembly 200 of the electrochemical apparatus 1 in the electronic device 2.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of the embodiments of this application.

**Claims**

1. An electrochemical apparatus, comprising an electrode assembly (200) and a housing (100) accommodating the electrode assembly (200); the electrode assembly (200) comprising a first electrode plate (210), a second electrode plate (220), and a separator (230); the first electrode plate (210), the second electrode plate (220), and the separator (230) being wound, the separator (230) being disposed between the first electrode plate (210) and the second electrode plate (220); wherein

   the first electrode plate (210) comprises a first current collector (211) and a first active material layer (212), wherein the first current collector (211) comprises a first region (2111) and a second region (2112), the second region (2112) is at an end of the first current collector (211) in a first direction X to form a first tab, and the first active material layer (212) is disposed in the first region (2111); and
   the second electrode plate (220) comprises a second current collector (221), at least two second tabs (222), and a second active material layer (223); wherein the at least two second tabs (222) are connected to an end of the second current collector (221), the end of the second current collector (221) being facing away from the second region (2112) in the first direction (X), the at least two second tabs (222) are spaced apart in a winding direction of the electrode assembly (200), the at least two second tabs (222) are integrally formed with the second current collector (221), and the second active material layer (223) is disposed on a surface of the second current collector (221); wherein
   the first region (2111) has a first side (2101) in a width direction of the first current collector (211), the first current collector (211) is wound, and the first direction (X) is an extension direction of the first side (2101).

2. The electrochemical apparatus according to claim 1, wherein the second region (2112) is wound continuously in the winding direction.

3. The electrochemical apparatus according to claim 1, wherein the electrochemical apparatus further comprises a first conductive member (300b) and a second conductive member (400b) ; wherein

   one end of the first conductive member (300b) is connected to the first tab, and another end of the first conductive member (300b) extends out of the housing (100); and
   ends of the at least two second tabs (222) facing away from the second current collector (221) are stacked, one end of the second conductive member (400b) is connected to the at least two second tabs (222), and another end of the second conductive member (400b) extends out of the housing (100).

4. The electrochemical apparatus according to claim 3, wherein the first conductive member (300b) is welded to the first tab to form a first welding region (301), and the electrochemical apparatus satisfies at least one of the following conditions:

   (a) $0.3mm \leq L_{11} \leq H$, wherein a second direction (Y) is a direction perpendicular to both the first direction (X) and a thickness direction (Z) of the electrochemical apparatus, a third direction (U) is a direction parallel to a plane where the first welding region (301) is located and perpendicular to the second direction (Y), $L_{11}$ is a width of the first welding region (301) in the third direction (U), the second region (2112) has a second side (2103) adjacent to the first region (2111) in the width direction of the first electrode plate (210), and H is a length of the second side (2103);
   (b) $0.5 < H/T \leq 3.5$, wherein the second region (2112) has a second side (2103) adjacent to the first region (2111) in a width direction of the first electrode plate (210), H is a length of the second side (2103), and T is thickness of the electrochemical apparatus;
   (c) $0.5mm \leq L_{12} < W$, wherein $L_{12}$ is a width of the first welding region (301) in a second direction (Y), and W is a width of the electrochemical apparatus in the second direction (Y), the second direction (Y) being a direction perpendicular to both the first direction (X) and a thickness direction (Z) of the electrochemical apparatus; or
   (d) $5N \leq F \leq 900N$, wherein F is a welding tension between the first conductive member (300) and the first tab.

5. The electrochemical apparatus according to claim 3, wherein the electrochemical apparatus comprises N first conductive members (300) and the electrochemical apparatus satisfies at least one of the following conditions:

(e) N=1 and $\frac{L21}{2} - 2d \leqslant L_1 \leqslant \frac{L21}{2} + 2d$

, wherein $L_1$ is a distance between the first conductive members (300) and the first side (2101) in the winding direction of the first electrode plate (210), the first region (2111) further has a third side (2102) in the width direction of the first current collector (211), $L_{21}$ is a distance between the first side (2101) and the third side (2102) in the winding direction of the first electrode plate (210), and d is width of the first conductive member (300);

(f) $N \geq 2$ and $\frac{n*L21}{(N+1)} - 2d \leqslant Ln \leqslant \frac{n*L21}{(N+1)} + 2d$,

wherein the first region (2111) further has a third side (2102) in the width direction of the first current collector (211), $L_{21}$ is a distance between the first side (2101) and the third side (2102) in the winding direction of the first electrode plate (210), n is a natural number ranging from 1 to N, Ln is a distance in the winding direction of the first electrode plate (210) between the first side (2101) and the n-th first conductive member (300) as counted from the first side (2101) in the winding direction, and d is width of the first conductive member (300); or

(g) $N \geq 2$, wherein the first conductive members (300) are stacked in a thickness direction (Z) of the electrochemical apparatus.

6. The electrochemical apparatus according to claim 3, wherein layers of an end of the first tab facing away from the second tab converge and are stacked in a thickness direction (Z) of the electrochemical apparatus, to form a first converging portion (213); and
the first conductive member (300) is fixed to the first converging portion (213).

7. The electrochemical apparatus according to claim 6, wherein the first converging portion (213) is bent, an end of the first converging portion (213) facing away from the second electrode plate (220) is a first end portion, and the first end portion is opposite to the second electrode plate (220); and
the first conductive member (300) comprises a first portion and a second portion connected to each other, the first portion is stacked on the first end portion, the second portion is bent relative to the first portion, one end of the second portion is connected to the first portion, and another end of the second portion extends away from the electrode assembly (200).

8. The electrochemical apparatus according to claim 1, wherein the second current collector (221) comprises:

a third region (2211), a second active material layer (223) on a surface of the third region (2211); and
a fourth region (2212) disposed at an end of the third region (2211), the end of the third region (2211) being facing away from the second region (2112), wherein a surface of the fourth region (2212) is not provided with the second active material layer (223); wherein
the at least two second tabs (222) comprise a fifth region (2221) and a sixth region (2222), the fifth region (2221) being connected to an end of the fourth region (2212), the end of the fourth region (2212) being facing away from the third region (2211); and the sixth region (2222) being connected to an end of the fifth region (2221), the end of the fifth region (2121) being facing away from the fourth region (2212); and
an insulation material layer (225) is provided on surfaces of the fourth region (2212) and the fifth region (2221).

9. The electrochemical apparatus according to claim 1, wherein the first electrode plate (210) is an anode plate, and a material of the first current collector (211) comprises at least one of copper, aluminum, nickel, or alloys thereof.

10. The electrochemical apparatus according to claim 1, wherein the first current collector (211) satisfies at least one of the following conditions:

(h) the first current collector (211) has a thickness of 3 $\mu$m to 6 $\mu$m; or
(i) the first current collector (211) has a tensile strength of 150 MPa to 450 MPa.

11. The electrochemical apparatus according to claim 1, wherein the first electrode plate (210) is a cathode plate, and a material of the first current collector (211) comprises aluminum.

12. An electronic device, comprising the electrochemical apparatus according to any one of claims 1 to 11.

FIG. 1

FIG. 2

FIG. 3

FIG. 4

FIG. 5

FIG. 6

1b

300b

214b

A

A

200b

Y

Z

X

400b

FIG. 7

1b

X

211b
210b 212b
214b

FIG. 8

FIG. 9

Europäisches
Patentamt

European
Patent Office

Office européen
des brevets

# EUROPEAN SEARCH REPORT

Application Number

EP 23 16 6188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 948 711 A (POWERAMP TECH LTD) 18 January 2022 (2022-01-18) | 1-3,5-12 | INV. H01M50/533 |
| A | * the whole document * | 4 | H01M50/534 H01M50/536 H01M50/538 H01M50/176 H01M50/178 H01M50/548 H01M10/0587 H01M4/64 |

TECHNICAL FIELDS
SEARCHED      (IPC)

H01M

The present search report has been drawn up for all claims

| Place of search | Date of completion of the search | Examiner |
|---|---|---|
| Munich | 28 July 2023 | Mugnaini, Veronica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 6188

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2023

| Patent document cited in search report | Publication date | Patent family member(s) | Publication date |
|---|---|---|---|
| CN 113948711 A | 18-01-2022 | NONE | |

EPO FORM P0459